## Europäisches Patentamt

## European Patent Office

## Office européen des brevets

(19)

(11) Publication number: **0 206 324**
A2

(12) # EUROPEAN PATENT APPLICATION

(21) Application number: **86108619.7**

(22) Date of filing: **25.06.86**

(51) Int. Cl.⁴: **G 02 B 27/00,** G 02 B 23/12

(30) Priority: **27.06.85 US 749362**

(43) Date of publication of application: **30.12.86 Bulletin 86/52**

(84) Designated Contracting States: **DE FR GB IT SE**

(71) Applicant: **HONEYWELL INC., Honeywell Plaza, Minneapolis Minnesota 55408 (US)**

(72) Inventor: **Harrison, John W., 8430 Pennsylvania Road, No. 209, Bloomington Minnesota 55438 (US)**
Inventor: **Rotier, Donald J., 22440 Hamline Avenue, St. Paul Minnesota 55113 (US)**

(74) Representative: **Rentzsch, Heinz et al, Honeywell Europe S.A. Holding KG Patent- und Lizenzabteilung Kaiserleistrasse 55, D-6050 Offenbach am Main (DE)**

(54) **Dual source display apparatus.**

(57) A dual source display apparatus uses images of object formats from two sources which are combined and presented in collimated superposition to a recipient's eye against the visual background of the surrounding environment. One source is a miniature cathode ray tube (16) while the second source is a night vision monocular intensifier (6). Both sources are structurally interrelated in a lightweight helmet mounted configuration with the intensifier portion (6) being detachable so that the CRT source (2) may be used alone. The optical path from the CRT is used to provide video scenes to the recipient's eye while for low visibility conditions with high thermal noise the scene of the surrounding environment is presented from the monocular intensifier (6) via a common portion (22, 14, 8) of the same optical path.

HONEYWELL INC.  
Honeywell Plaza  
Minneapolis, MN 55440 USA

June 23, 1986  
A1110952 EP  
HR/ep

## DUAL SOURCE DISPLAY APPARATUS

The present invention relates to display systems. More specifically, the present invention is directed to a helmet mounted display apparatus for providing a dual source display to a recipient's eye.

The ability of a pilot to navigate at low altitudes at night for extended periods of time while also avoiding flight hazards is recognized as a current problem, particularly in military applications. A helmet mounted display is currently being used to provide the visual information to the pilot and to reduce the workload of the pilot to an acceptable level. The display provides the necessary symbology for either day or night flight. However, it is currently limited to a conventional video for night which cannot always handle all elements of a mission. Infra-red is a suitable spectrum for providing long range target detection and, in some weather conditions, it can provide superior night vision capability. However, since infra-red depends on temperature gradients in the scene, it exhibits problems detecting obstacles such as trees in cold/rainy weather conditions. On the other hand, a so-called "night vision" system can provide a warning for this type of obstacle under most nighttime conditions but has inherent limitations for providing long range target detection

- 2 -

and has no symbology display capability.  Accordingly, it would be desirable to provide a pilot display apparatus combining the advantages of the CRT and night vision display sources in an integrated dual source display.

The object of the present invention is to provide an improved dual source display apparatus.

In accomplishing this and other objects, there has been provided, in accordance with the present invention, a dual source display apparatus having a CRT display, a night vision monocular intensifier and an optical package combining the two displays into a collimated superpositioned format.

A better understanding of the present invention may be had when the following detailed description is read in connection with the accompanying drawings in which:

Figure 1 is a side view of an example of a dual source display apparatus embodying the present invention,

Figure 2 is a front view of the dual source display apparatus shown in Figure 1 and

Figure 3 is a cross sectional illustration of the optical path structure used in the dual source display shown in Figs. 1 and 2.

- 3 -

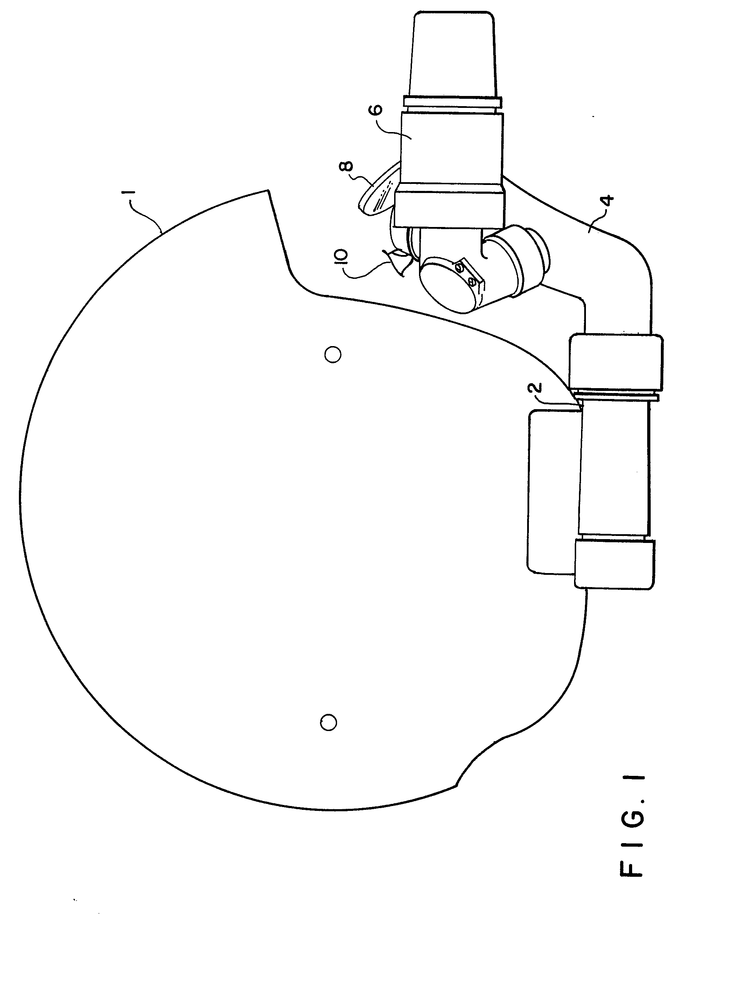

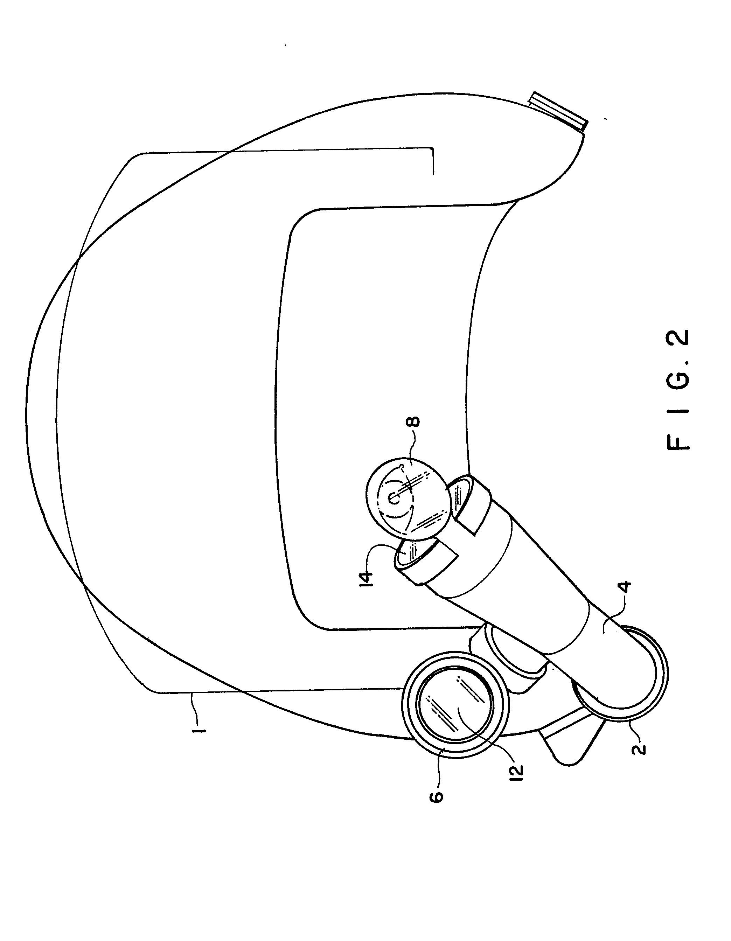

Referring to Figs. 1 and 2 in more detail, there is shown a helmet mounted dual source display apparatus mounted on a helmet 1 and including a cathode ray tube (CRT) display section 2, an optical path combining section 4 and a night vision intensifier section 6.  The displays from the CRT section 2 and the intensifier section 6 are superimposed on a partially reflecting combiner glass 8 and are thereby available for viewing by the adjacent eye 10 of the pilot.  In Fig. 2, there is shown a front view of the display apparatus shown in Fig. 1 and including an input lens 12 for the night vision intensifier section and an output lens 14 for directing the combined display on the display combiner 8.

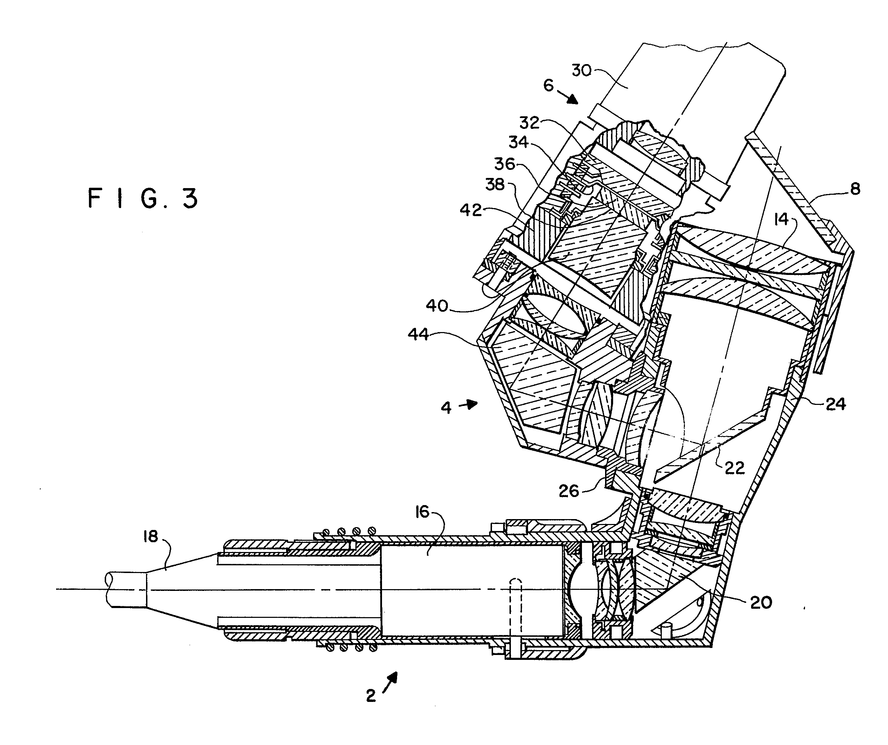

Referring to Fig. 3, there is shown a cross-section of the optical path combining structure 4 for enabling the dual source display to be combined into a single superimposed display on the display combiner 8.  In the CRT section 2 there is provided a miniature cathode ray tube display apparatus 16 connected by an electrical cable 18 to suitable associated electronic equipment (not shown).  The output of the CRT 16 is focused through an optical system including a trapazoidal prism 20 and a selectively coated beam splitter 22 onto the output combiner 8.  The CRT section 2 is attached to the helmet 1 in a conventional manner, and a further discussion of the specific attachment is believed to be unnecessary for a

-4-

complete understanding of the present invention. The intensifier section 6 is attached to a main housing 24 for the beam splitter 22 and prism 20 via a suitable means such as a bayonet-type mount 26 similar to that used for interchangeable lenses on photographic cameras so that the intensifier section 6 may be selectively detached from the optical section 4 and the CRT portion 2 used alone, e.g., under daylight conditions. The CRT portion 2 is used to provide video information and flight symbologies to the pilot's eye via the display reticle 8. This CRT display uses preferably a green phosphor which provides a brightness level suitable for daylight as well as night displays.

The intensifier portion 6 comprises an input barrel 30 containing the input optics including the input lens 12 for focusing the image of the object being observed onto a fiber optic input face plate 32. A photo cathode 34 is arranged to receive the image from the face plate 32 to provide a light amplification thereof. A microchannel plate 36 provides an output from the photo cathode to a phosphor screen 38 located at one end of a fiber optic output inverter 40. An internal power supply 42 is arranged to supply electrical power for the image intensification operation of the intensifier 6. The detailed operation of the intensifier 6 is well-known in the art. The output of the fiber optic inverter is focused through an optical system including an Amici prism 44 onto the

-5-

surface of the beam splitter 22.  It should be noted that the optical axis of the intensifier section 6 shown in Fig. 3 has been rotated for purposes of illustration and is actually parallel to the optical axis of the CRT portion 2 as shown in Figs. 1 and 2.  The image intensifier output phosphor screen 38 is preferably provided with a contrasting color display such as red or yellow which allows the user to discriminate more readily between the intensified scene imagery and the CRT symbology.  In addition, particularly "hot" targets seen by the CRT driven display 2, can be highlighted since they will show up in green on top of the contrasting color image from the intensifier 6.  This intensified scene imagery is supplemented by the thresholded CRT display and provides a dual spectrum night flying package as needed for enroute navigation.

Claims:

1. A dual source display comprising a cathode ray tube display (2), c h a r a c t e r i z e d  b y  a night vision monocular intensifier (6) and an optical combining means (22, 8) for providing a collimated superpositioned format of an output from said CRT display and said intensifier.

2. A display according to claim 1, c h a r a c t e r - i z e d  i n  t h a t  said combining means (22, 8) includes a partially reflecting glass (8) for concurrently reflecting the outputs from said CRT display (2) and said intensifier (6) against a visual background of the surrounding environment.

3. A display according to claim 1 or 2, c h a r a c t e r - i z e d  i n  t h a t  said combining means (22, 8) includes a first optical path (16, 20) for said CRT display, a second optical path (40, 44) for said intensifier and an optical path combining means (8, 14, 22) for allowing said second optical path to share a fixed portion of said first optical path.

4. A display according to claim 3, c h a r a c t e r - i z e d  i n  t h a t  said optical path combining means includes a half-silvered mirror (22) arranged to intersect said first and second optical paths.

5. A display according to one of the preceeding claims, c h a r a c t e r i z e d  i n  t h a t  said combining means includes means (4, 8, 14) for mounting the display adjacent to an observer's eye.

6. A display according to one of the preceeding claims, c h a r a c t e r i z e d  i n  t h a t  said combining means includes attaching means (26) for selectively connecting said intensifier (6) to said CRT display.

7. A display according to claim 6, c h a r a c t e r - i z e d   i n   t h a t  said attaching means (26) includes joint means for allowing a selective rotation of a longitudinal axis of said intensifier (6) with respect to a longitudinal axis of said CRT display (2).

8. A display according to claim 7, c h a r a c t e.r - i z e d   i n   t h a t  said joint means affords a parallel relationship of said axes.

9. A display according to one of the preceeding claims, c h a r a c t e r i z e d   i n   t h a t  said output from said CRT display (2) is a different color from said output from said intensifier (6).

10. A display according to one of the preceeding claims, c h a r a c t e r i z e d   i n   t h a t  cathode ray tube (16) includes an electrical cable (18) connected thereto for supplying energizing and power signals to said cathode ray tube and said intensifier (6) includes a battery (42) for supplying power to said intensifier.

F I G. I

FIG. 2

F I G. 3

0 206 324

3/3